# EUROPEAN PATENT SPECIFICATION

(11) **EP 4 011 595 B1**
(45) Date of publication and mention of the grant of the patent: **28.08.2024**
(21) Application number: 22155532.9
(22) Date of filing: 23.05.2019
(51) Int. Cl.: B29C 45/44, B29C 33/44, B62J 1/00, B29C 45/40, B29L 31/30

(54) **SUPPORT ELEMENT, FOR EXAMPLE A SADDLE FOR VEHICLES**
TRÄGERELEMENT WIE Z.B. EIN SATTEL FÜR FAHRZEUGE
ÉLÉMENT DE SUPPORT, PAR EXEMPLE SELLE POUR VÉHICULES

(30) Priority: 31.05.2018 IT 201800005920
(43) Date of publication of application: 15.06.2022
(62) Divisional of application: 19736499.5
(73) Proprietor: Selle Royal Group S.p.A., 36050 Pozzoleone (VI) (IT)
(72) Inventor: BIGOLIN, Barbara, 36050 Pozzoleone (Vicenza) (IT); MALFATTI, Marco, 36050 Pozzoleone (Vicenza) (IT)
(74) Representative: Feltrinelli, Secondo Andrea

(56) References cited:
- WO-A1-2007/066165
- WO-A2-2017/009423
- DE-A1- 102015 111 537

## Description

### TECHNICAL FIELD OF THE INVENTION

The present invention relates to a saddle for a support element for the human body, such as for example a saddle for vehicles, in particular a saddle for bicycles or motorcycles, a seat, a grip, a handle, an armrest, a backrest, a headrest or an equipment for sport and leisure, as well as a support element for the human body obtainable with this mold.

### TECHNICAL BACKGROUND

In the modern era, bicycle saddles include seats with numerous conformations, able to adapt to the different anatomy of the user, as well as equipped with comfort elements, able to guarantee a certain comfort to the same user, also on the basis of the specific use for which the bicycle saddle is intended.

Generally speaking, bicycle saddles are composed of the following elements:
- a covering, which can be made of different materials, from leather to synthetic materials, and which can have different aesthetic variations;
- a padding, covered by the covering, which can be of different nature but generally presents itself in the form of a foamed material, particularly in polyurethane, which can be formulated according to different ratios of its components in order to offer different stiffness and/or elasticity features. The padding can be glued or directly foamed on an underlying support structure;
- a base or support structure, in jargon called shell, mainly made of an injected plastic material, i.e. a thermoplastic material possibly mixed with other materials or fillers (such as glass, carbon, natural fibre fillers, etc.) during the injection phase. Moreover, the shell can comprise inserts of different materials (for example rubber or fibres or composite materials) made by co-molding or over-injection processes and positioned in specific areas (such as the anatomical/genital, ischial, side flexing favouring pedalling areas, etc.), for example to allow greater comfort performance in the same areas. The support structure is therefore adapted to offer the adequate support and dynamism performance to the saddle itself, as well as to define the aesthetic and comfort lines of the resulting saddle;
- a metal structure, in jargon called a "fork", with or without spring elements, which, in addition to supporting the other components of the saddle, guarantees - through the two substantially parallel areas or bars of its central part - the possibility of attaching the same saddle to a seat post and, therefore, to the bicycle frame.

As is known, over the course of time many support elements have been proposed, in particular vehicle saddles, but in most cases, they can be obtained by complicated manufacturing processes, using relatively expensive and often non-ecological molds and procedures.

### OBJECTS OF THE INVENTION

An object of the present invention is to provide a saddle for vehicles, in particular for bicycles, or for a component thereof. Another object of the present invention is to provide a mold which is capable of making a support element or a saddle for vehicles, in particular for bicycles, or one of their components, easily.

Another object of the present invention is to provide a mold which does not entail high storage costs for the product obtained from the mold itself.

An object of the present invention is to provide a new support element or a new saddle for vehicles, in particular for bicycles, or a component thereof.

Another object of the present invention is to provide a support element or a saddle or a component thereof which can be produced easily.

Another object of the present invention is to provide a support element or a saddle that can be obtained with a process easy to be carried out, by means of equally practical molds.

Another object of the present invention is to provide a support element or a saddle or a component thereof which can be adapted or "customized".

According to one aspect of the invention, a support element or a saddle according to claim 1 is provided.

The dependent claims refer to preferred and advantageous examples of embodiments of the invention.

### BRIEF DESCRIPTION OF THE DRAWINGS

Other features and advantages of the invention will be more apparent from the description of an exemplary embodiment of a support element, such as a saddle, or a component thereof, illustrated by way of example in the accompanying drawings, wherein:
figure 1 is a perspective view, slightly from the top and exploded of a support element, such as a saddle, according to the present invention;
figure 2 is a perspective view of a closed mold according to the present invention;
figure 3 is a rear view of the mold of figure 2,
figure 4 is a side view of the mold of figure 2 and 3;
figure 5 is a perspective view of a component of the mold of figures 2-4;
figure 6 is a perspective view of another component of the mold of figures 2-4;

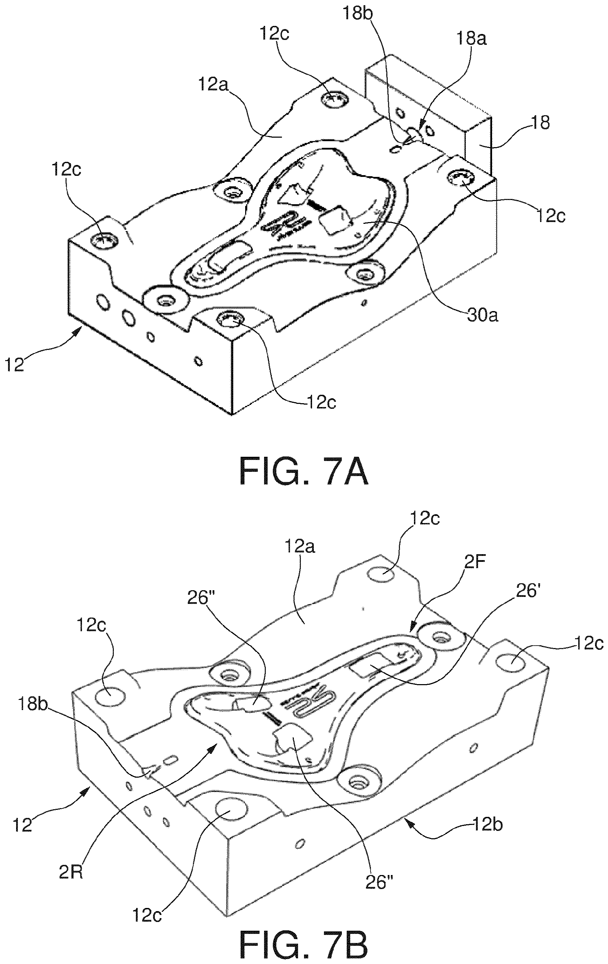

figures 7A and 7B are further perspective views, respectively from the front part and from the rear part, of the other component of figure 6,
figure 8 is a top view of the mold of figures 2-4 slightly in transparency,
figure 9A is a perspective view of the base component, as soon as the molding step is completed,
figure 9B is a perspective view of the finished base component of figure 9A,
figure 10A is a side view of the mold of figures 2-4 slightly in transparency,
figure 10B is a side view of parts of the mold of figures 2-4;
figures 11 and 12 are respectively perspective and side views of part of the mold of figures 2-4 and of the molded base component, in an open configuration of the mold and with the base component released therefrom,

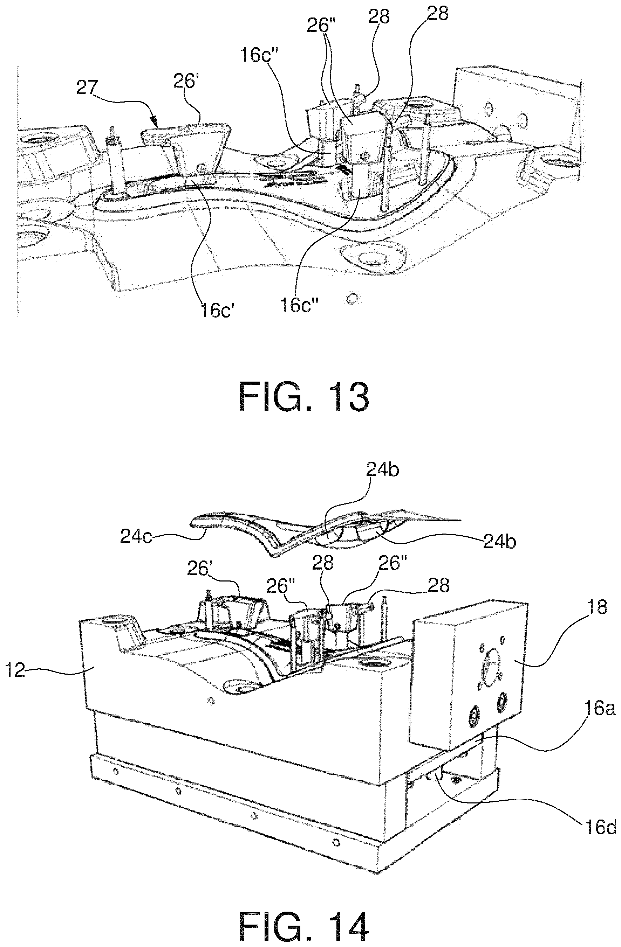

figure 13 is an enlarged detail of the view of figure 11,
figure 14 is a perspective view from the rear of the mold and of the base component of figures 11 and 12.

In the accompanying drawings, identical parts or components are distinguished by the same reference numerals.

### EXEMPLARY EMBODIMENTS OF THE INVENTION

The present invention will be described with particular reference to a saddle for vehicles, for example for bicycles or motorcycles, but it will be understood that the same features, described with reference to a saddle, are to be considered also with reference to other support elements, for example support elements for the human body, all falling within the scope of protection of the present patent application, for example a seat, a grip, a handle, an armrest, a backrest, a headrest, an equipment for sport and leisure.

With reference to the attached figures, with an illustrative and not limiting aim, a saddle for vehicles has been generally indicated with reference numeral 1.

This saddle 1 comprises a base component 2 (or shell), designed to be constrained for example to the frame of a vehicle such as a bicycle or a motorcycle, possibly through the interposition of a seat post (not shown in the figures), a padding component 3, arranged on the base component 2, and a cover element (or covering) 4, placed around and covering the padding component 3.

In the present description, the term base component 2 means the so-called shell of a saddle or another rigid component present and/or associable in the support component according to the present invention.

The base component 2 comprises an upper surface 2a, as well as a lower surface 2b, while the padding component 3 comprises an upper surface 3a and a lower surface 3b intended to come into contact and/or be constrained to the upper surface 2a of the base component 2.

In the present discussion, the terms upper and lower, front or frontal and rear (or similar), unless the contrary is explicitly indicated, are to be intended according to the arrangement of a saddle in use on a frame of a vehicle, such as a bicycle or a motorcycle.

Likewise, the terms upward or vertical or horizontal are to be considered, unless the contrary is explicitly indicated, according to the arrangement of a saddle in use on a frame of a vehicle, such as a bicycle or a motorcycle.

A peculiarity of the present invention consists in the fact that the base component 2 is made of polyurethane or of a polyurethane material.

In the course of the present discussion, the term polyurethane (or polyurethane material) refers to both polyurethane as such, and a polyurethane-based compound or a polyurethane mixture, unless the contrary is explicitly indicated.

The polyurethane of the base component 2, according to at least one version of the present invention, is obtained from the reaction between a polyisocyanate (such as for example of toluene diisocyanate, methylene diisocyanate origin or modified isocyanate variants thereof) and a polyol composition with base of polyether and/or polyester containing cross-linking agents, catalysts and, possibly, a predefined percentage of mineral and/or natural fillers.

Unlike the thermoplastic material usually used for making conventional shells, the technique according to the present invention provides a cross-linking reaction inside the mold 10 which gives the polymeric matrix (which will constitute the base component 2) greater stability and stiffness.

Therefore, according to the present invention (or at least one version thereof) the base component 2 or shell (or other component) is obtained by a casting or injection process and not by thermoplastic injection.

The resulting product is a compact polyurethane composite. Given the versatility of the system, it is possible to introduce a predefined quantity of fillers (such as, only for example: glass fibres, carbon fibres, natural fibres) to enhance certain mechanical features thereof, for example impact resistance at low temperatures and/or shock resistance.

Among the advantages offered by the present invention, the simplification of production equipment can also be mentioned, thanks to the use of aluminium molds, which favours rapid production cycles.

Considering a version of the chemical process according to the present invention, the components of the polyurethane or of the polyurethane material meet in a mixing head where they are mixed together. The polyol/isocyanate mixing ratio is chosen according to the isocyanate/polyol compositions and the filler to be used, as well as on the basis of the results to be obtained.

In a version of the invention, the base component 2 is made at least partly of polyurethane while in another version of the present invention, the base component 2 is made entirely of polyurethane.

In a version of the invention, the polyurethane material constituting the base component 2 is rigid, since this component is designed to support the weight of the user, as well as to determine a stable and resistant constraint with the vehicle frame.

The padding component 3, in comparison, is softer or less rigid than the base component 2, since its purpose is not support but comfort.

If desired, also the padding component 3 is entirely made of polyurethane. Alternatively, the padding component 3 can be made mainly of expanded foam, if desired a polyurethane foam, and possibly may include inserts or portions made of other materials.

The inserts can, for example, be made of a thermoplastic material.

In a version of the invention, the padding component 3 could be made of an ethylene-vinyl acetate (EVA), for example by thermoforming.

According to a particular version of the invention, possible inserts present in the padding component 3 can also be made of a polyurethane material, such as for example a foam having a different rigidity or hardness or density with respect to the polyurethane foam which makes up most of the padding component 3 (for example a less rigid or less dense foam, in order to increase comfort in the areas affected by the insert itself), or in a polyurethane gel.

Between the base component 2 and the frame, for example the frame of a vehicle, such as a bicycle, a so-called "fork" component or fork 5 could also be interposed, usually comprising a U-shaped component formed by a pair of round bars or prongs connected to one end.

More particularly, the fork 5 can have a pair of prongs 5a, each having, in use, a rear end 5b, as well as, in use, a front end 5c, such ends 5b and 5c being constrained to the base component 2, for example engaged in respective seats 24. Moreover, if desired, the front ends 5c of the prongs are joined as a bridge by means of a U-shaped connection portion.

Alternatively, the base component 2 could be a rigid shell without a connection fork to the seat post, capable of being directly connected to the seat post, or a shell with integrated seat post tube, or yet with an annular fork, e.g. that commercially termed "moebius".

In a version of the invention, the cover element (or covering) 4 is made entirely of polyurethane. Alternatively, it can be made of silicone or PVC (poly-vinyl-chloride) or leather or fabric or a combination of the aforementioned materials.

In a version of the invention, the cover element 4 and the padding component 3 are made of the same material. For example, if the padding component 3 is made of a self-skinning polyurethane foam, the cover element 4 is made from the external surface of this foam, which - by hardening and/or thickening - creates this sort of coating which is harder and/or thicker and resistant with respect to the "body" of the padding component itself. This result is obtained automatically following the foaming process of the self-skinning polyurethane foam.

In a version of the invention, all the components 2, 3 and 4 of the saddle 1 are made entirely of polyurethane or of polyurethane material The present invention also relates to a mold 10 for making the base component 2. Specifically, the mold 10 is composed of a lower portion 12 and an upper portion 14.

In a version of the invention, the lower portion 12 constitutes a lower half-mold (also called matrix) while the upper portion 14 constitutes an upper half-mold (also called punch).

Considering that the lower portion 12 is fixed, the upper portion 14 is movable, in the sense that it can be moved away from the lower portion 12 and/or moved toward it in a reversible manner. In particular, the upper portion 14 can be moved away from the lower portion 12, for example at the end of the process, to allow the molded piece to come out, in this case of the molded base component 2, or even possibly in intermediate steps of the molding process.

The mold 10 further comprises an extraction system 16. The extraction system 16 is suitable, for example at the end of the process, to release the molded base component 2 from the mold 10 and to obtain the necessary undercuts, as will be better described in the following of the present discussion.

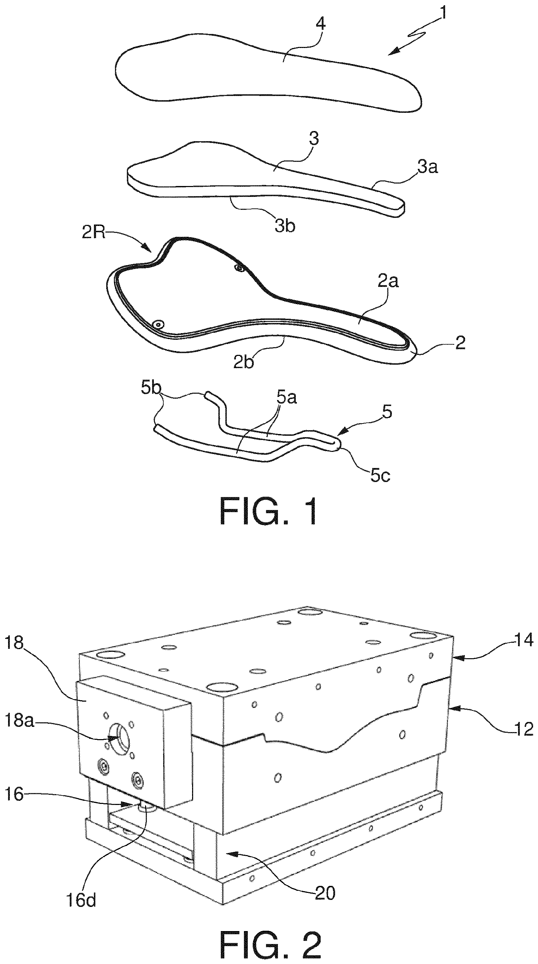

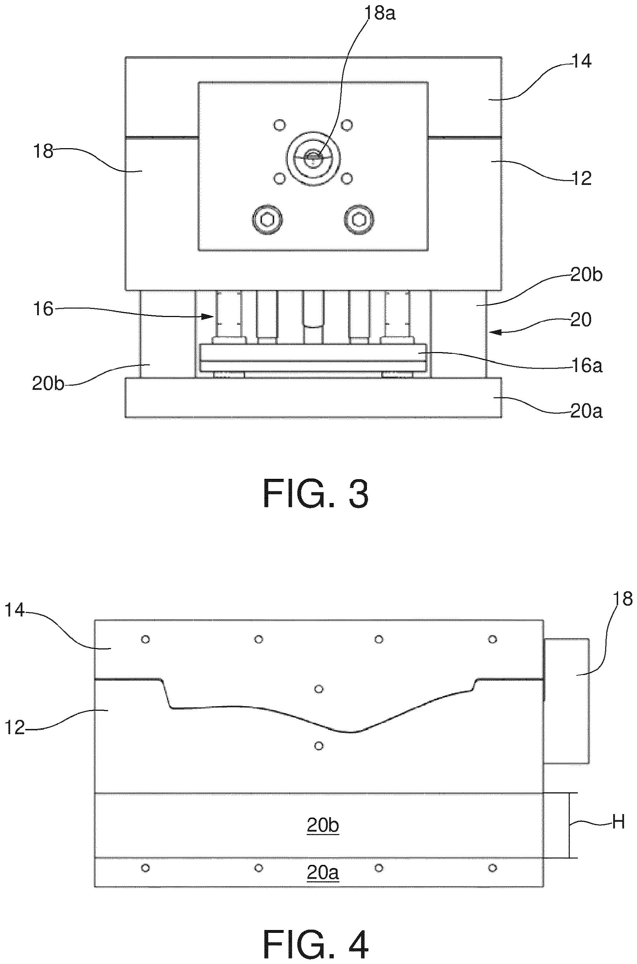

As can be seen in figures 2-5, the mold 10 can be provided in a first operating phase, or closed operating phase, in which the upper portion 14 is in contact with the lower portion 12, causing closure of the mold 10.

Alternatively, the mold 10 (in a version not shown) can also be used in a version in which the upper portion 14 is not in contact with the lower portion 12, thus maintaining the mold 10 in an open configuration.

Optionally, means can be provided for maintaining the mold in the closed or open position, which are known in the field.

The mold 10 has a cavity 30 for molding the base component 2.

In a version of the invention, for example in the first operating phase with the mold 10 in the closed configuration, the upper portion 14 and the lower portion 12 determine, inside them, a cavity 30.

The cavity 30 has a conformation corresponding (in negative) to that of the base component 2 of the support element for the human body or saddle 1.

The mold 10 further comprises an insertion unit 18. The insertion unit 18 comprises a hole 18a, capable of placing the cavity 30 in fluid communication with an insertion system of known type.

The hole 18a is a through hole. Moreover, in a version of the invention, the hole 18a has an extension parallel to the plane on which the mold 10 lies.

The insertion unit 18, in a version of the invention, is fixed or constrained in a stable manner to the lower portion 12 of the mold 10, in particular to a side wall thereof. The insertion unit 18 is positioned so as not to hinder the movement of the upper portion 14 of the mold 10.

In a version of the invention, the lower portion 12 of the mold 10, in correspondence with the hole 18a, has a pilot channel 18b, capable of conveying the material in the fluid or liquid state that comes from the insertion system towards the cavity 30.

The mold 10 further comprises a supporting platform 20, consisting of a support base 20a and, possibly, of support walls 20b. The supporting platform 20 is placed below the lower portion 12 of the mold 10.

In a version of the invention, a free space is enclosed between the support base 20a and the support walls 20b. This free space at least partially houses this extraction system 16.

The support base 20a can have a parallelepiped conformation with a substantially rectangular or square base, which determines the plane on which the mold 10 lies. This plane is substantially parallel, in at least one version of the invention, to the ground.

In a version of the invention, the support walls 20b are placed on the two opposite or parallel sides of the support base 20a and have a determined height H.

In at least one version of the invention, the insertion unit 18 allows the insertion of the material able to make the base component 2, such as for example polyurethane, through an insertion parallel to the plane on which the mold 10 lies, for example by a shaped cylindrical seat that houses the injector of the injection device.

The injected material is naturally in the liquid or fluid state or in any case an injectable material.

The extraction system 16 comprises movable rods 16b and further movable rods 16c, possibly moved by an extraction plate 16a.

The extraction system 16 allows, once the mold 10 is in an open configuration, to detach and release the base component 2 molded by the mold 10 and, thanks to the conformation according to the present invention, to obtain the necessary undercuts and/or holes.

The movable rods 16b and/or the further movable rods 16c comprise rods (possibly having a substantially cylindrical section and/or a single body substantially rigid and/or not deformable during its movement) which, as they move, determine the lifting of the molded base component 2.

In particular, the rods 16b and/or 16c move upwards (considering the mold in use), raised by the extraction plate 16a and/or by means of alternative systems. The extraction plate 16a, when present, is placed under the lower portion 12 of the mold 10.

The rods 16b move along a vertical direction, substantially perpendicular to the plane on which the mold 10 lies.

The further movable rods 16c have a shaped proximal end 26 (facing the cavity 30 and therefore towards the lower surface 2b of the base component 2 to be molded).

The shaped proximal end 26 allows to create the necessary undercuts and/or holes of the base component 2, suitable for determining a specific conformation of the base component 2 (for example of its lower surface 2b), for example suitable for determining the connection with the fork 5 of the saddle 1.

In a version of the invention, at least one of the further movable rods 16c extends along a direction tilted with respect to the vertical direction along which the movable rods 16b extend and/or tilted with respect to the plane on which the mold 10 lies.

In particular, the at least one further movable rod 16c is tilted towards the interior of the mold 10 and/or towards at least one of the movable rods 16b.

Thanks to the present invention, therefore, by means of a mold which generally has, in at least one version of the invention, a structure similar to that of traditional molds, it is possible to obtain a molded component (such as the base component 2) provided with holes and/or undercut surfaces. These holes and/or undercut surfaces, in fact, will be released from the mold 10 and/or from the lower portion 12 by means of said at least one tilted further movable rod 16c which, thanks to its shaped proximal end 26, during the molding step, will act as a template for the parts of the base component 2 to be made with undercuts and/or perforated, while subsequently, it will be able to "free" or release the molded component.

The movable rods 16b and/or the further movable rods 16c can be constrained, connected and/or hooked, through their distal ends, to the extraction plate 16a, if present.

The extraction plate 16a possibly moves upward along a substantially vertical direction, that is to say along a direction substantially perpendicular to the plane on which the mold 10 lies.

The extraction plate 16a, and in general the components of the mold 10 which are movable, according to a version of the invention, can move thanks to automated means able to generate their movement, for example by means of electric impulses or by means of pistons or pneumatic means, etc.

In a version of the invention, the movement of the plate 16a, and therefore of the molded piece, occurs after the upper portion 14 of the mold 10 is released from the lower portion 12, for example completely released from the latter.

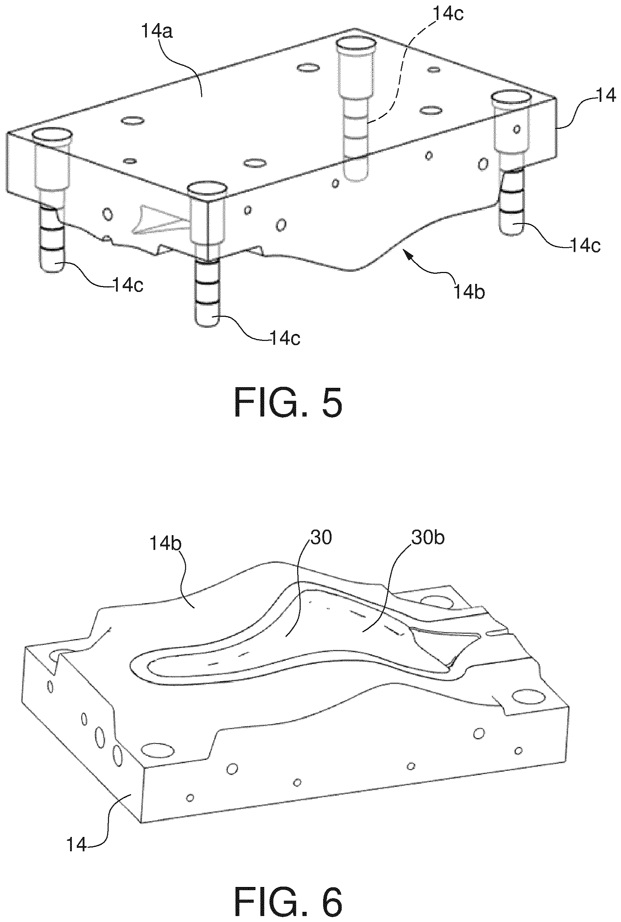

According to a variant shown in the figures, for example in figure 6, the upper portion 14 has an external surface 14a and an internal surface 14b.

The external surface 14a is substantially parallel to the plane on which the mold 10 lies.

The internal surface 14b, opposite and substantially parallel to the external surface 14a, is oriented towards the interior of the mold 10.

The internal surface 14b has, substantially in its central portion, a recessed area which determines, in at least one version of the invention, the upper wall 30b of the cavity 30.

This upper wall 30b of the cavity 30 reproduces, in negative, the upper surface 2a of the base component 2.

The upper portion 14 of the mold 10 can have - for example in angular or apical positions thereof - pin means 14c adapted to be engaged, in a reversible and/or slidable manner, with the lower portion 12 of the mold 10.

For example, in the version shown in figure 6, the upper portion 14 has an overall conformation substantially parallelepiped with a rectangular or square base and the pin means 14c extend downwards, vertically, from the four corners or edges of the internal surface 14b of the same.

In the same way, the lower portion 12 can have an upper face 12a and housing means 12c able to house the pin means 14c of the upper portion 14. The housing means 12c are for example configured as an opening having a length corresponding to that of the pin means 14c and a section slightly larger than that of the latter, so as to allow them to be housed.

The position of the pin means 14c and of the housing means 12c can be reversed, or different, without thereby departing from the scope of protection of the present invention, since the pin means 14c and the housing means 12c simply have the function to reversibly constrain and release the upper portion 14 and the lower portion 12 of the mold 10, being able to be replaced by similar elements.

The upper face 12a of the lower portion 12 has, substantially in its central portion, a relief zone which determines the lower wall 30a of the cavity 30.

This lower wall 30a of the cavity 30 reproduces, in negative, the lower surface 2b of the base component 2. Moreover, this lower wall 30a of the cavity 30 is affected, in certain areas, by the shaped proximal ends 26 of the further movable rods 16c, since they determine particular portions of the lower surface 2b of the base component 2 itself.

The lower portion 12 of the mold 10 also comprises a lower face 12b, substantially parallel to the plane on which the mold 10 lies and opposite to the upper face 12a.

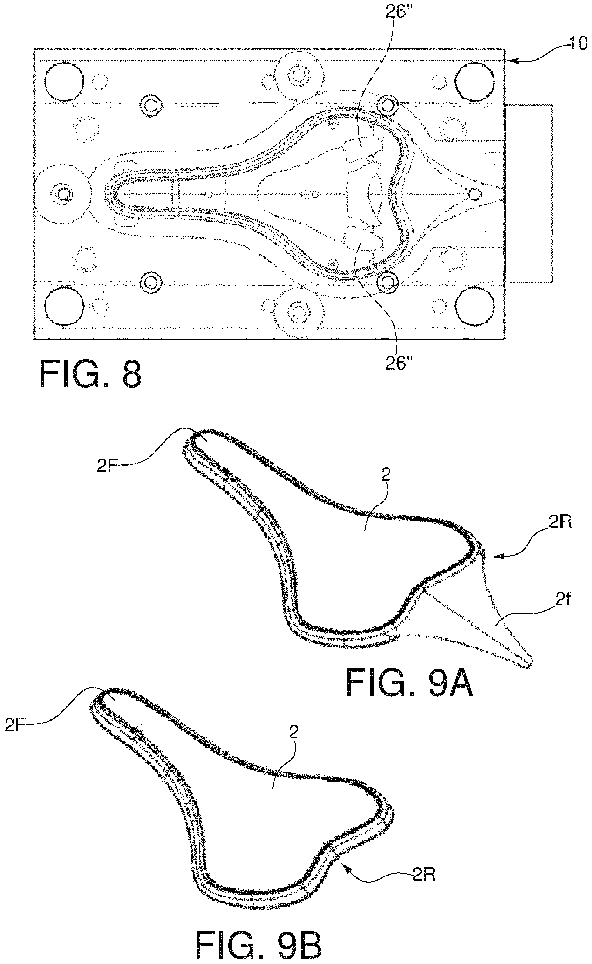

At the perimetric profile of the cavity 30 there is the separation line between the upper portion 14 and the lower portion 12 of the mold 10. Along this perimetric profile, at the insertion unit 18, is the pilot channel 18b for the insertion hole 18a. The pilot channel 18b has a substantially flat configuration parallel to the plane on which the mold 10 lies and has a junction area between hole 18a and perimeter profile/cavity 30. Therefore, once the solidification of the material that will constitute the base component 2 is completed, at the pilot channel it will remain some material that constitutes a sprue or flash 2f (visible for example in figure 9A, 9B), which will then be trimmed and eliminated to obtain the finished base component 2.

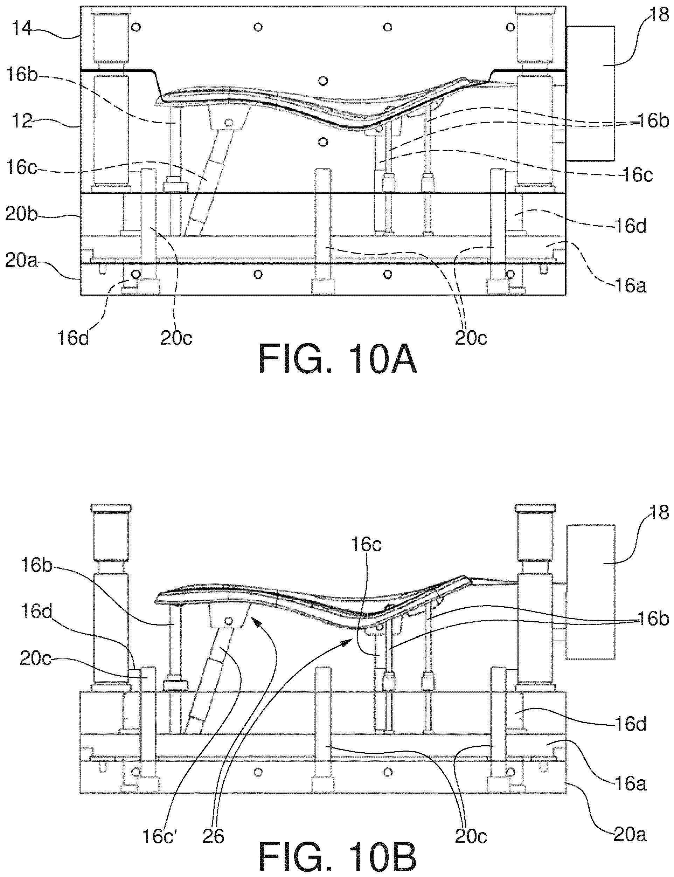

As can be seen, for example, in figures 10A and 10B, the supporting platform 20, when present, is constrained to the lower portion 12 of the mold 10 (for example by means of constraint pins 20c) so that, during the movement of the various portions of the mold itself, these two components remain united.

As can be seen, for example, in figures 2, 10A and 10B, the extraction plate 16a can reversibly slide vertically upwards or downwards, in order to move the movable rods 16b, 16c.

The movement of the extraction plate 16 can be adjusted and/or constrained by sliding guides 16d, which guide the reversible movement of the extraction plate 16a itself.

In use, according to a version of the invention, the extraction plate 16a moves upward and pushes the movable rods 16b and the further movable rods 16c upwards. In the absence of the extraction plate 16a, the movable rods 16b and/or 16c can move automatically, guided by other movement means, both synchronously and independently of at least one with respect to the others.

The movable rods 16b are - in at least one version of the invention - appointed to remove and/or lift the base component 2 from the lower portion 12 of the mold 10.

In the version wherein at least one further movable rod 16c moves by lifting in a diagonal direction, in particular towards the centre of the mold 10, it also contributes to detaching and/or lifting the printed base component 2 from the lower portion 12 (in particular from the lower wall of the cavity 30), at the same time causing any printed undercuts and/or holes in the base component 2 to be released.

As regards the further movable rods 16c, we can identify a first further movable rod 16c', located at the frontal portion 2F of the base component 2 which must be printed. Therefore, this first further movable rod 16c' is positioned in the frontal part of the mold 10, at the area of the more tapered cavity 30, which will determine the formation of the frontal portion 2F itself of the base component 2. Given that in such zone 2F, at least in a version of the invention, in the lower surface 2b of the base component 2 there is a seat 24c shaped to receive and constrain the front ends 5c of the prongs and/or having a shape suitable for receiving and constraining the U-connected front end 5c of the fork 5, the first shaped proximal end 26' of the first further movable rod 16c' is shaped so as to make, in the frontal portion 2F of the lower surface 2b of the base component 2 to be printed, the seat 24c of the same.

In at least one version of the invention, this proximal end 26' is made substantially wedge-shaped, wherein this wedge can be composed of a central body from which at least one tongue 27 (corresponding to the at least one seat 24c) departs. This at least one tongue 27 extends towards an end of the mold 10 opposite to that corresponding to the rear portion 2R of the base component 2. In this way, the seat 24c will have an opening conveniently shaped to house the front ends 5c of the fork 5, which opening is oriented towards the rear portion 2R of the base component 2 and extends instead inside the latter, towards its front portion 2F.

In a version of the invention, this tongue 27 extends towards an end of the mold 10 opposite to the one where there is the insertion unit 18.

This first further movable rod 16c' moves upward in a direction tilted towards the interior of the mold 10.

In doing so, in a version of the invention, at least the first further movable rod 16c' is able to translate the base component 2 towards a direction corresponding to the rear portion 2R of the base component 2 itself, freeing up any undercuts and/or holes created during molding.

Furthermore, at least in one version of the invention, in the lower surface 2b of the base component 2, at its rear region 2R, there are at least one, or better two seats 24b, shaped to receive and constrain the rear ends 5b of the prongs of the fork 5.

Therefore, there are at least one, or better two, second further movable rods 16c", each provided with a second proximal end 26" shaped so as to make, in the rear zone 2R of the lower surface 2b of the base component 12 to be printed, the at least one seat 24b thereof.

In at least one version of the invention, said at least one second proximal end 26" is substantially made with a pin 28 (corresponding to the at least one seat 24b). This pin 28 can extend from a central body of the at least one second proximal end 26".

This at least one pin 28 extends towards an end of the mold 10 opposite to that corresponding to the front portion 2F of the base component 2 or towards an end of the mold 10 corresponding to the rear portion 2R of the base component 2. In this way, each seat 24b will have an opening conveniently shaped to house one of the rear ends 5b of the prongs of the fork 5, which opening is oriented towards the front portion 2F of the base component 2 and extends instead inside the latter, towards its rear portion 2R.

In a version of the invention, such at least one second further movable rod 16c" raises in a substantially vertical direction. In this case, the second proximal end 26" and/or the pin 28 can be tilted with respect to the substantially vertical direction of the second further mobile rods 16c". The second proximal end 26" and/or the pin 28 are therefore tilted at the back towards the top, in such a way to allow in any case the extraction of the molded piece thanks to the movement od the mobile rods 16ba nd of the first further mobile rod 16c', which as said is tilted towards the inner portion of the mold 10. The configuration of the second proximal end 26" and/or of the pin 28 corresponds to the direction of the prongs of the fork 5 which, in this version, raise towards the top at their back portion.

In a further version of the invention, such at least one second further movable rod 16c" moves upward in a direction tilted towards the interior of the mold 10 and/or tilted towards the first further movable rod 16c'. Therefore, in the event that at least one second further movable rod 16c" moves upward in a tilted direction, such direction is opposite to that of the first further movable rod 16c'.

In doing so, at least the first further movable rod 16c' and/or in combination with the movement of such at least one second further movable rod 16c", is capable of translating the base component 2 towards a direction corresponding to the rear portion 2R of the base component 2 itself, freeing up any undercuts and/or holes created during molding, and/or (without translating the molded piece) to freeing up any undercuts and/or holes created during molding, for example by making the pins 28 come out from the molded seats 24b, and/or the tongue 27 from the molded seat 24c.

To keep the molded piece in position, i.e. without translating it, in a version of the invention, the movable rods 16b can have, at their proximal end 26b, engagement means (for example in the form of cylinders or tips) with the base component 2. Such cylinders or tips, however, do not create holes in the base component 2 such as to compromise the functionality and mechanical strength and support capabilities thereof necessary for its correct use.

In a variant of the invention, the shaped proximal ends 26 of the further movable rods 16c can be pivoted or hinged or constrained by means of a joint, for example, a ball joint to the respective further movable rods 16c. In this way, it is possible to vary the tilting of these proximal ends 26 according to the molding need or according to the desired conformation to achieve in the base component 1.

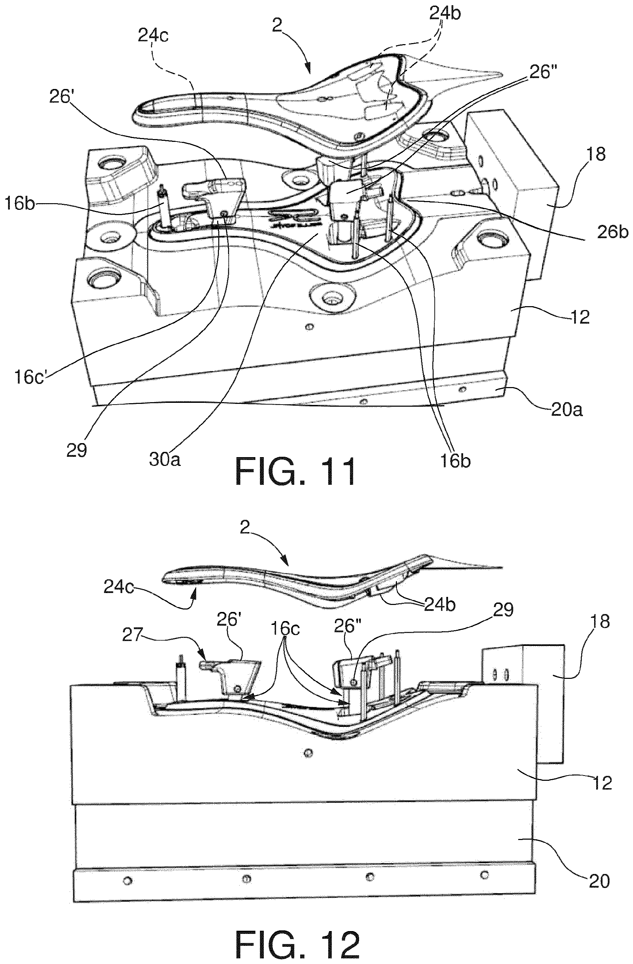

In the figures such pin, constraining or ball means can be exemplified with the reference number 29 shown in figures 11 and 12.

In an alternative embodiment of the invention, in order to release the base component 2 molded from the mold 10, retractable means could be provided, such as for example a tongue and/or a retractable pin, located at the proximal ends of the further movable rods.

For example, such retractable means can be in the extracted position, so as to form undercuts and/or holes in the base component 2, with particular reference to its lower surface 2b.

Once the material with which this component is made has solidified, the movable rods and/or the further movable rods raise and the retractable means are retracted within the respective ends, thus freeing up the undercuts and/or holes made through the same; of course, suitable sealing means will be present so as to prevent the material composing the base component 2 from penetrating into the slots which allow these retractable means to be moved outwards and/or inwards.

In the presence of such retractable means, the movements of the respective movable rods could be along a vertical direction, not tilted, still allowing the base component 2 to be released from the mold, once its molding stage has ended. Alternatively, the retractable means could still be mounted on movable rods, at least one of which is raised in a direction tilted with respect to the vertical.

In all cases, in order to print the base component 2, the proximal ends 26 of the further movable rods 16c constitute the lower wall 30a of the lower portion 12 of the mold 10.

Subsequently, the movable rods 16b and the further movable rods 16c raise the base component 2 molded from the mold 10, also freeing up any undercuts and/or holes thereof due to the movement of at least one further movable rod 16c (for example in particular of the first further movable rod 16c') or of the proximal end 26 of the same.

As can be noted, the movable rods 16b and also the further movable rods 16c act directly on the base component 2 to determine the molding and the removal from the mold 10.

As can be seen, the solution of the mold 10 according to the present invention reduces the labour time during the molding step since an operator does not need to insert manually inserts for the undercuts and at the same time the flashes are reduced around the printed piece. In fact, the extraction plate 16a, when present, in addition to moving the movable rods 16b, 16c and releasing the molded base component 2 and the corresponding undercuts, also works in closure, pressing during the molding the shaped proximal ends 26 of the rods downwards and then "sealing" better the lower wall 30a of the cavity 30.

The molding process according to the present invention, carried out by means of the mold 10, provides for the execution of the following steps:
- possible application of a release agent on the mold 10, for example in particular on the lower wall 30a and on the upper wall 30b of the cavity 30 (such step can optionally provide for the positioning of the shaped proximal ends 26 of the further movable rods 16c so as to determine the lower wall 30a of the cavity 30 and the consequent forming of the base component 2 with possible undercuts and/or holes);
- introducing into the cavity 30 of the mold 10 the material, such as for example the polyurethane or the polyurethane material, by the insertion unit 18;
- raising the movable rods 16b and the further movable rods 16c so as to allow the extraction of the molded base component 2 and the freeing up of any undercuts and/or holes, with consequent extraction of the molded piece.

In particular, the step of moving the base component 2 takes place by moving the movable rods 16b in a vertical direction upwards so as to lift and/or detach the molded base component 2 from the lower portion 12 and/or moving upwards the further movable rods 16c, each provided with a shaped proximal end 26, which define any undercuts and/or holes in the lower surface 2b of the base component 2.

According to this method, the step of releasing the base component 2 from any undercuts and/or holes takes place:
moving at least a first further movable rod 16c and/or the first further movable rod 16c' upwards in a tilted direction towards the interior of the mold and/or
rotating the shaped proximal end 26 of the further movable rods 16c, by means of a joint or pin, or constraining, or ball means 29, and/or
retracting a tongue 27 and/or a pin 28 of the shaped proximal ends 26 inside the further movable rods 16c.

The mold 10 (or a plurality of molds 10 depending on the expected productivity and/or the diversity of items to be produced simultaneously) can be installed in different types of plant (such as rail, in-line, carousel or rotary table, etc.).

The base component 2 can undergo at least one of the following further steps:
- cutting the material that forms the sprue or flash, and/or
- trimming the piece, i.e. eliminating the flash along the closure perimeter of the mold, and/or
- cleaning the piece, in particular from the release agent remaining on the surface of the piece and/or any dust, and/or
- storing/stocking the finished base component 2.

Once a finished base component 2 is obtained, the following further processing are possible.

The base component 2 can be applied to a foaming mold (for example a male mold) for making the padding component 3 and the possible application of the covering 4.

The steps of the process for the production of a saddle 1, in addition to those described above for making the base component 2, are the following:
- positioning a mold having a cavity shaped like the upper part of a saddle 1,
- positioning the covering 4 (automatically or manually by an operator) above the cavity for the saddle,
- possible start-up of the vacuum process to make the covering 4 stick to the cavity wall,
- anchor the base component 2 (with the lower surface 2b) to the mold (and the upper surface 2a facing towards the cavity for the saddle),
- inserting and possible hardening and/or thickening of the material for making the padding component 3 between covering 4 and base component 2,
- extracting the printed saddle.

As it has been seen, the padding component 3 could be made directly, for example printed, on the base component 2 or fixed thereto, for example by gluing. In this way, the padding component is firmly constrained, i.e. it is not removable unless it is damaged, with respect to the base component 2.

Alternatively, the saddle 1 could be provided with removable constraining means of the padding component 3 to the base component 2, which removable constraining means can comprise screws, snap engagement means, grafting means, bayonet anchoring means or similar means. Due to this arrangement it is possible to easily and quickly assemble and disassemble the base component 2 and the padding component 3.

If desired, in the event wherein the support element is a saddle 1, this can also comprise engagement means for an accessory, such as a handle or protective components, a light, a bag, a bottle-holder or other element which may be useful for the user.

Moreover, a saddle 1 according to the present invention can also be equipped with one or more rapid attachment structures or ICS, for example supported by the removable constraining means.

The saddle 1 can further comprise at least one tongue extending, from the lower surface 3b of the padding component 3, towards the front or towards the rear of the saddle 1. Such tongue can be engaged with a suitable seat formed for example in the upper surface 2a of the base component 2.

Of course, the positions of the tongue and the appropriate seat could be reversed without limitations.

In this way, a relative sliding could be obtained between the base component 2 and the padding component 3. If desired, the tongue and the respective seat can be formed at the tapered frontal part 2F of the base component 2 and of the padding component 3.

In the base component 2, and at an intermediate portion thereof, a longitudinal through groove (not shown) can also be formed.

The present invention, in the case wherein the saddle 1 is equipped with removable constraining means of the padding component 3 to the base component 2, also relates to a kit, for making a support element as indicated above, comprising at least one base component 2 and two or more padding components 3. These latter may have different shape or dimension from one another, wherein each padding component is equipped with removable constraining means to the base component 2.

In this event, the padding component 3 can project laterally and/or on the rear and/or on the front with respect to the base component 2, and, advantageously, the lower surface 3b of the padding component 3 can therefore be greater than the upper surface 2a of the basic component 2. In such version, the constraining means can be advantageously formed at a central or intermediate area of the padding component 3, so as to removably anchor the base component 2 and the padding component 3, although the latter has a greater width or protrudes with respect to the base component 2.

If desired, the lower surface 3b of the padding component 3 can be greater than the upper surface 2a of the base component 2, and therefore extend beyond the upper surface 2a of the base component 2, at sections on the sides and/or on the rear and/or on the front of the padding component 3.

The base component 2 can then be configured so that it can be at least partly, and preferably completely, housed or positioned to size in a recess or hollow portion delimited in the padding component 3.

The base component 2 and the padding component 3 can be made entirely of polyurethane, and possibly also the covering 4 can be made of polyurethane.

The saddle 1, according to a further version of the invention, wherein for example the padding component 3 and the base component 2 can be released from one another, can provide a rigid base, at the lower surface 3b of the padding component 3. Such rigid base is adapted to make contact or abutment with the base component 2 of the saddle itself.

Such rigid base can be made of the same material and/or in the same way as the base component 2 and be integrated or rigidly constrained to the padding component 3.

As will be understood, a support element for the human body, in particular a saddle according to a version of the present invention, has the base component 2, the padding component 3 and, possibly the covering 4, all made entirely of polyurethane.

Moreover, the use of polyurethane also for the base component allows to reduce the manufacturing costs, since it is possible to directly mold the polyurethane in a mold near the molds or production units of the other components of the saddle. Therefore, there is not necessarily a need for warehouses in which store the shells, since they are produced in line with the other components of the saddle, so that production costs are considerably reduced.

As a result, costs and time for the saddle design are also reduced.

Moreover, the fact of making one or more shells of the polyurethane padding component ensures a better adhesion or union between the base component and the padding component.

In this way, the padding component and the at least one shell or base component constitute a single body made of a single material, i.e. polyurethane.

Furthermore, any inserts, for example of gel, positioned between covering 4 and padding component 3 or between padding component 3 and base component 2 are preferably made of a polyurethane material, to ensure excellent adhesion and chemical affinity between the various components.

As said, the padding component 3 constitutes the comfort portion for the user, while the base component 2 constitutes the support portion of the user's weight. Therefore, despite being made of the same material, i.e. the polyurethane, the padding component 3 has a softer consistency than the base component 2 while the base component 2 presents a more rigid consistency, for example capable of supporting the weight of a user without deforming, with respect to the padding component 3.

Clearly, also due to the presence of removable constraint means between shell and padding, a saddle according to the present invention is adaptable or customizable according to the needs or tastes of users.

As can be deduced from the preceding description, with respect to the traditionally used steel molds, the mold according to the present invention allows to reduce the manufacturing times and the costs. Moreover, it is possible to satisfy the market with new products, thanks to the mold according to the present invention which can easily adapted to the needs of the market and of the user.

Furthermore, usually the shells obtained with traditional methods must be stored for their subsequent programmed use and, before use, treated on the surface to be compatible with the gluing or foaming of the paddings. Design, costs, manufacturing times, storage, etc. are all disadvantages of the known technique. Moreover, since the behaviour of the plastic is not constant over time, the prolonged storage of traditional shells can cause deformations and the withdrawal of the material, and these are one of the main reasons for rejection, when they must then be joined to the relative padding, in addition to the fact that any deformations prevent the traditional shell from adapting perfectly to the mold, causing further waste and squander in the saddle manufacturing process.

Even the performances of traditional shells are not, for the aforementioned reasons, always constant over time.

It can therefore be seen that the present invention allows to overcome the drawbacks of the known art, obtaining the production of base components with improved performances, more ecological and more adaptable to the specific needs of the sector or of users.

Furthermore, by improving the use of the raw material (for example polyurethane), the transit times are shortened in the various processing steps and the storage warehouses as well as the internal movements of the base components 2 can be eliminated.

As a result, labour costs and risks of product obsolescence can be reduced.

Furthermore, it is possible to have total compatibility for the materials that make the base component 2 and the padding component 3 (and/or the covering 4), for the saddle 1 there can be a noticeable reduction in terms of waste, CO₂ emissions (also in view of the reductions envisaged by the UN states by 2050), lower consumptions and consequent lower environmental impact both at the production level and for the product disposal once it has reached the end of its life.

## Claims

1. Saddle (1) for vehicles, for bicycles or motorcycles, comprising a base component (2), set to be constrained to a frame of a vehicle such as a bicycle or a motorcycle, a padding component (3), arranged on said base component (2), and a cover element or covering (4), wherein said base component (2) comprises an upper surface (2a) and a lower surface (2b) and said padding component (3) comprises an upper surface (3a) and a lower surface (3b) intended to come into contact and be constrained with said upper surface (2a) of the base component (2), **characterized in that** said base component (2) is made at least partly or entirely of polyurethane or of a polyurethane material, wherein said polyurethane or polyurethane material is obtained from the reaction between a polyisocyanate, such as toluene diisocyanate, methylene diisocyanate or modified isocyanate variants thereof, and a polyol composition, with base of polyethers and/or polyesters, containing cross-linking agents, catalysts and, wherein said support element comprises means for the removable constraining of said padding component (3) to said base component (2), wherein said removable constraining means comprise screws, snap engagement means or connection means.

2. Saddle according to claim 1, wherein beyond said base component (2), also said padding component (3) is made of polyurethane or of a polyurethane material and/or wherein said polyurethane material constituting said base component (2) is rigid, since it is designed to support the weight of the user, as well as to determine a stable and resistant constraint with said vehicle frame and said padding component (3) is softer or less rigid than said base component (2), since its purpose is not support but comfort, and/or wherein said padding component (3) is made of expanded foam, for example a polyurethane foam, or of ethylene-vinyl acetate (EVA), for example by thermoforming.

3. Saddle according to claim 1 or 2, wherein said padding component (3) includes inserts or portions made of other materials, for example a thermoplastic material, or inserts made of a polyurethane material, such as for example a foam having a different rigidity or hardness or density with respect to the polyurethane foam which makes up most of said padding component (3), for example a less rigid or less dense foam, in order to increase comfort in the areas affected by said inserts, or in a polyurethane gel,

4. Saddle according to any one of the preceding claims, wherein said cover element or covering (4) is made entirely of polyurethane or it is made of silicone or PVC (poly-vinyl-chloride) or leather or fabric or a combination of the aforementioned materials, and/or wherein said cover element (4) and said padding component (3) are made of the same material.

5. Saddle according to any one of the preceding claims, wherein said padding component (3) is made of a self-skinning polyurethane foam and said cover element (4) is made from the external surface of this foam, which, by hardening and/or thickening, creates this sort of coating which is harder and/or thicker and resistant with respect to the body of said padding component (3).

6. Saddle according to any one of the preceding claims, wherein said base component (2), said padding component (3) and said cover element (4) are made entirely of polyurethane or of polyurethane material.

7. Saddle according to claim any of the preceding claims, wherein said saddle (1) is a saddle for bicycles, and wherein said base component (2) is set to be constrained to a frame of a bicycle, wherein said base component (2) comprises, for the connection between said base component (2) and said frame, a "fork" component or fork (5), usually comprising a U-shaped component formed by a pair of round bars or prongs (5a), each having one end, rear during use (5b) as well as one end, front during use (5c), wherein said ends (5b) and (5c) are constrained to said base component (2), e.g. engaged in respective seats (24).

8. Saddle according to the preceding claim, wherein said front ends (5c) are joined as bridges by means of a U-shaped connection portion.

9. Saddle according to any one of the preceding claims, wherein said base component (2) comprises, for the connection between said base component (2) and said frame, a rigid shell lacking connection fork, capable of being directly connected for example to a seat post tube, or a shell with integrated seat post tube, or an annular fork.

10. Saddle according to any one of the preceding claims, wherein said base component (2), at said lower surface (2b) and at a tapered frontal portion (2F) thereof, has a seat (24c) shaped to receive and constrain the front ends (5c) of the prongs of said fork (5) and/or having a shape adapted to receive and constrain the U-connected front end (5c) of said fork (5) and/or wherein said base component (2), at said lower surface (2b) and at an enlarged rear portion (2R) thereof, has at least one or two seats (24b), shaped to receive and constrain the rear ends (5b) of the prongs of said fork (5).

11. Saddle according to any one of previous claims, wherein said seat (24c) has an opening conveniently shaped to house said front ends (5c) of said fork (5), which opening is oriented towards the rear portion (2R) of said base component (2) and extends instead inside the latter, towards its front portion (2F).

12. Saddle according to any one of previous claims, wherein each of said seat (24b) has an opening conveniently shaped to house one of said rear ends (5b) of said prongs of said fork (5), which opening is oriented towards said front portion (2F) of said base component (2) and extends instead inside the latter, towards its rear portion (2R).

13. Saddle according to any one of the preceding claims, wherein said base component (2) is configured to be at least partly or completely housed or positioned to size in a recess or hollow portion delimited in said padding component (3).

14. Saddle according any one of the preceding claims, wherein said saddle (1) comprise at least one tongue extending from said lower surface (3b) of the padding component (3) towards the front or towards the rear of said saddle (1), wherein said tongue is engaged with a suitable seat formed in said upper surface (2a) of said base component (2).

15. Saddle according to any one of previous claims, wherein said saddle (1) provides a rigid base, at the lower surface (3b) of said padding component (3), said rigid base is adapted to make contact or abutment with said base component (2) and/or wherein said rigid base is made of the same material of said base component (2) and is integrated or rigidly constrained to said padding component (3).

16. Kit for making a saddle (1) according to any one of the preceding claims, comprising at least one base component (2) and two or more padding components (3), wherein said two or more padding components (3) have different shape or dimension from one another, wherein each of said padding components (3) is equipped with removable constraining means to said base component (2).

17. Kit according to the preceding claim, wherein said padding component (3) projects laterally and/or on the rear and/or on the front with respect to said base component (2) and the lower surface (3b) of said padding component (3) is greater than said upper surface (2a) of said base component (2).

18. Kit according to claim 15 or 16, wherein said constraining means are formed at a central or intermediate area of said padding component (3), so as to removably anchor said base component (2) and said padding component (3), although the latter has a greater width or protrudes with respect to said base component (2).

## Patentansprüche

1. Sattel (1) für Fahrzeuge, für Fahrräder oder Motorräder, umfassend eine Basiskomponente (2), die eingestellt ist, um an einem Rahmen eines Fahrzeugs, wie einem Fahrrad oder einem Motorrad, befestigt zu werden, eine Polsterkomponente (3), die auf der besagten Basiskomponente (2) angeordnet ist, und ein Abdeckelement oder eine Abdeckung (4), worin die besagte Basiskomponente (2) eine obere Oberfläche (2a) und eine untere Oberfläche (2b) umfasst und die besagte Polsterkomponente (3) eine obere Oberfläche (3a) und eine untere Oberfläche(3b) umfasst, die dazu bestimmt sind, mit der besagten oberen Oberfläche (2a) der Basiskomponente (2) in Berührung zu kommen und daran befestigt zu werden, **dadurch gekennzeichnet, dass** die besagte Basiskomponente (2) mindestens teilweise oder vollständig aus Polyurethan oder aus einem Polyurethanmaterial besteht, worin das besagte Polyurethan oder Polyurethanmaterial aus der Reaktion zwischen einem Polyisocyanat, wie Toluylendiisocyanat, Methylendiisocyanat oder modifizierten Isocyanatvarianten davon, und einer Polyolzusammensetzung, auf der Basis von Polyethern und/oder Polyestern, die Vernetzungsmittel, Katalysatoren enthalten, erhalten wird, und worin das besagte Stützelement Mittel für die lösbare Befestigung der besagten Polsterkomponente (3) an der besagten Basiskomponente (2) umfasst, worin die besagten lösbaren Befestigungsmittel Schrauben, Schnappeingriffmittel oder Verbindungsmittel umfassen.

2. Sattel nach Anspruch 1, worin außer der besagten Basiskomponente (2) auch die besagte Polsterkomponente (3) aus Polyurethan oder aus einem Polyurethanmaterial besteht und/oder worin das die besagte Basiskomponente (2) bildende Polyurethanmaterial starr ist, da es dazu ausgelegt ist, das Gewicht des Benutzers zu tragen, sowie eine stabile und widerstandsfähige Befestigung mit dem besagten Fahrzeugrahmen herzustellen und wobei die besagte Polsterkomponente (3) weicher oder weniger steif ist als die besagte Basiskomponente (2), da ihr Zweck nicht das Stützen, sondern der Komfort ist, und/oder worin die besagte Polsterkomponente (3) aus expandiertem Schaumstoff, zum Beispiel einem Polyurethanschaumstoff, oder aus Ethylen-Vinylacetat (EVA), zum Beispiel durch Thermoformung, besteht.

3. Sattel nach Anspruch 1 oder 2, worin die besagte Polsterkomponente (3) Einsätze oder Abschnitte aus anderen Materialien, zum Beispiel einem thermoplastischen Material, oder Einsätze aus einem Polyurethanmaterial, wie zum Beispiel einem Schaumstoff mit einer anderen Steifigkeit oder Härte oder Dichte in Bezug auf den Polyurethanschaumstoff, der den Großteil der besagten Polsterkomponente (3) ausmacht, zum Beispiel einem weniger steifen oder weniger dichten Schaumstoff zur Erhöhung des Komforts in den von den besagten Einsätzen betroffenen Bereichen, oder in einem Polyurethangel enthält.

4. Sattel nach irgendeinem der vorangegangenen Ansprüche, worin das besagte Abdeckelement oder die besagte Abdeckung (4) vollständig aus Polyurethan besteht oder aus Silikon oder PVC (Polyvinylchlorid) oder Leder oder Stoff oder einer Kombination der vorgenannten Materialien besteht und/oder worin das besagte Abdeckelement (4) und die besagte Polsterkomponente (3) aus demselben Material bestehen.

5. Sattel nach irgendeinem der vorangegangenen Ansprüche, worin die besagte Polsterkomponente (3) aus einem selbsthäutenden Polyurethanschaumstoff besteht und das besagte Abdeckelement (4) aus der Außenfläche dieses Schaumstoffs besteht, der durch Aushärtung und/oder Verdickung diese Art von Beschichtung bildet, die härter und/oder dicker und widerstandsfähiger in Bezug auf den Körper der besagten Polsterkomponente (3) ist.

6. Sattel nach irgendeinem der vorangegangenen Ansprüche, worin die besagte Basiskomponente (2), die besagte Polsterkomponente (3) und das besagte Abdeckelement (4) vollständig aus Polyurethan oder aus Polyurethanmaterial bestehen.

7. Sattel nach einem Anspruch der vorangegangenen Ansprüche, worin der besagte Sattel (1) ein Sattel für Fahrräder ist und worin die besagte Basiskomponente (2) eingestellt ist, um an einem Rahmen eines Fahrrads befestigt zu werden, worin die besagte Basiskomponente (2), für die Verbindung zwischen der besagten Basiskomponente (2) und dem besagten Rahmen, eine "Gabel"-Komponente oder eine Gabel (5) umfasst, normalerweise umfassend eine U-förmige Komponente, die durch ein Paar runder Stangen oder Zinken (5a) ausgebildet wird, die jeweils ein während der Verwendung hinteres Ende (5b) sowie ein während der Verwendung vorderes Ende (5c) aufweisen, worin die besagten Enden (5b) und (5c) an der besagten Basiskomponente (2), z. B. in jeweilige Sitze (24) in Eingriff gebracht, befestigt werden.

8. Sattel nach dem vorangegangenen Anspruch, worin die besagten vorderen Enden (5c) mittels eines U-förmigen Verbindungsabschnitts als Brücken verbunden sind.

9. Sattel nach irgendeinem der vorangegangenen Ansprüche, worin die besagte Basiskomponente (2), für die Verbindung zwischen der besagten Basiskomponente (2) und dem besagten Rahmen, eine starre Schale ohne Verbindungsgabel umfasst, die zum Beispiel direkt mit einem Sattelstützenrohr oder einer Schale mit integriertem Sattelstützenrohr oder einer Ringgabel verbunden werden kann.

10. Sattel nach irgendeinem der vorangegangenen Ansprüche, worin die besagte Basiskomponente (2), an der besagten unteren Oberfläche (2b) und an einem sich verjüngenden vorderen Abschnitt (2F) davon, einen Sitz (24c) aufweist, der so geformt ist, dass er die vorderen Enden (5c) der Zinken der besagten Gabel (5) aufnimmt und befestigt und/oder eine Form aufweist, die dazu ausgelegt ist, das U-förmig verbundene vordere Ende (5c) der besagten Gabel (5) aufzunehmen und zu befestigen und/oder worin die besagte Basiskomponente (2), an der besagten unteren Oberfläche (2b) und an einem vergrößerten hinteren Abschnitt (2R) davon, mindestens einen oder zwei Sitze (24b) aufweist, die so geformt sind, dass sie die hinteren Enden (5b) der Zinken der besagten Gabel (5) aufnehmen und befestigen.

11. Sattel nach irgendeinem der vorangegangenen Ansprüche, worin der besagte Sitz (24c) eine Öffnung aufweist, die zweckmäßig geformt ist, um die besagten vorderen Enden (5c) der besagten Gabel (5) unterzubringen, wobei die Öffnung zum hinteren Abschnitt (2R) der besagten Basiskomponente (2) hin ausgerichtet ist und sich stattdessen innerhalb der letzteren, zu ihrem vorderen Abschnitt (2F) hin, erstreckt.

12. Sattel nach irgendeinem der vorangegangenen Ansprüche, worin jeder der besagten Sitze (24b) eine Öffnung aufweist, die zweckmäßig geformt ist, um eines der besagten hinteren Enden (5b) der besagten Zinken der besagten Gabel (5) unterzubringen, wobei die Öffnung zum besagten vorderen Abschnitt (2F) der besagten Basiskomponente (2) hin ausgerichtet ist und sich stattdessen innerhalb der letzteren, zu ihrem hinteren Abschnitt (2R) hin, erstreckt.

13. Sattel nach irgendeinem der vorangegangenen Ansprüche, worin die besagte Basiskomponente (2) so konfiguriert ist, dass sie mindestens teilweise oder vollständig in einer Aussparung oder einem hohlen Abschnitt, der in der besagten Polsterkomponente (3) begrenzt ist, untergebracht oder nach Größe positioniert wird.

14. Sattel nach irgendeinem der vorangegangenen Ansprüche, worin der besagte Sattel (1) mindestens eine Zunge umfasst, die sich von der besagten unteren Oberfläche (3b) der Polsterkomponente (3) zur Vorderseite oder zur Rückseite des besagten Sattels (1) hin erstreckt, worin die besagte Zunge mit einen geeigneten Sitz, der in der besagten oberen Oberfläche (2a) der besagten Basiskomponente (2) ausgebildet ist, in Eingriff gebracht wird.

15. Sattel nach irgendeinem der vorangegangenen Ansprüche, worin der besagte Sattel (1) eine starre Basis an der unteren Fläche (3b) der besagten Polsterkomponente (3) vorsieht, wobei die besagte starre Basis so ausgelegt ist, dass sie mit der besagten Basiskomponente (2) in Berührung oder in Anlage kommt und/oder worin die besagte starre Basis aus dem gleichen Material wie die besagte Basiskomponente (2) besteht und in die besagte Polsterkomponente (3) integriert oder starr an dieser befestigt ist.

16. Bausatz zur Herstellung eines Sattels (1) nach irgendeinem der vorangegangenen Ansprüche, umfassend mindestens eine Basiskomponente (2) und zwei oder mehr Polsterkomponenten (3), worin die besagten zwei oder mehr Polsterkomponenten (3) eine unterschiedliche Form oder Abmessung voneinander aufweisen, worin jede der besagten Polsterkomponenten (3) mit lösbaren Befestigungsmitteln an der besagten Basiskomponente (2) ausgestattet ist.

17. Bausatz nach dem vorangegangenen Anspruch, worin die besagte Polsterkomponente (3) seitlich und/oder an der Rückseite und/oder an der Vorderseite in Bezug auf die besagte Basiskomponente (2) vorsteht und die untere Oberfläche (3b) der besagten Polsterkomponente (3) größer ist als die besagte obere Oberfläche (2a) der besagten Basiskomponente (2).

18. Bausatz nach Anspruch 15 oder 16, worin die besagten Befestigungsmittel in einem Mitten- oder Zwischenbereich der besagten Polsterkomponente (3) ausgebildet sind, um die besagte Basiskomponente (2) und die besagte Polsterkomponente (3) auf lösbare Weise zu verankern, obwohl letztere eine größere Breite aufweist oder in Bezug auf die besagte Basiskomponente (2) vorsteht.

## Revendications

1. Selle (1) pour véhicules, pour bicyclettes ou motocyclettes, comprenant un composant de base (2), destiné à être contraint à un châssis d'un véhicule tel qu'une bicyclette ou une motocyclette, un composant de rembourrage (3), disposé sur ledit composant de base (2), et un élément ou couche de couverture (4), dans laquelle ledit composant de base (2) comprend une surface supérieure (2a) et une surface inférieure (2b) et ledit composant de rembourrage (3) comprend une surface supérieure (3a) et une surface inférieure (3b) destinée à entrer en contact et à être contrainte avec ladite surface supérieure (2a) du composant de base (2), **caractérisée en ce que** ledit composant de base (2) est constitué au moins partiellement ou entièrement de polyuréthane ou d'un matériau polyuréthane, dans laquelle ledit polyuréthane ou matériau polyuréthane est obtenu à partir de la réaction entre un polyisocyanate, tel que le diisocyanate de toluène, diisocyanate de méthylène ou variantes d'isocyanate modifiées de celui-ci, et une composition de polyol, à base de polyéthers et/ou de polyesters, contenant des agents de réticulation, catalyseurs et dans laquelle ledit élément de support comprend des moyens pour la contrainte amovible dudit composant de rembourrage (3) audit composant de base (2), dans laquelle lesdits moyens de contrainte amovibles comprenant des vis, des moyens d'enclenchement ou des moyens de connexion.

2. Selle selon la revendication 1, dans laquelle au-delà dudit composant de base (2), ledit composant de rembourrage (3) est également en polyuréthane ou en un matériau polyuréthane et/ou dans laquelle ledit matériau en polyuréthane constituant ledit composant de base (2) est rigide, puisqu'il est conçu pour supporter le poids de l'utilisateur, ainsi que pour déterminer une contrainte stable et résistante avec ledit châssis de véhicule et ledit composant de rembourrage (3) est plus souple ou moins rigide que ledit composant de base (2), puisque son but n'est pas le soutien mais le confort, et/ou dans laquelle ledit composant de rembourrage (3) est constitué de mousse expansée, par exemple une mousse de polyuréthane, ou d'éthylène-acétate de vinyle (EVA), par exemple par thermoformage.

3. Selle selon la revendication 1 ou 2, dans laquelle ledit composant de rembourrage (3) comprend des inserts ou des parties en d'autres matériaux, par exemple un matériau thermoplastique, ou des inserts en un matériau polyuréthane, comme par exemple une mousse ayant une rigidité, une dureté ou une densité différente par rapport à la mousse de polyuréthane qui constitue la majeure partie dudit composant de rembourrage (3), par exemple une mousse moins rigide ou moins dense, afin d'augmenter le confort dans les zones affectées par lesdits inserts, ou dans un gel polyuréthane.

4. Selle selon l'une quelconque des revendications précédentes, dans laquelle ledit élément ou couche de couverture (4) est entièrement en polyuréthane ou il est en silicone ou en PVC (polychlorure de vinyle) ou en cuir ou en tissu ou en une combinaison des matériaux susmentionnés, et/ou dans laquelle ledit élément de couverture (4) et ledit composant de rembourrage (3) sont constitués du même matériau.

5. Selle selon l'une quelconque des revendications précédentes, dans laquelle ledit composant de rembourrage (3) est constitué d'une mousse de polyuréthane auto-décapante et ledit élément de couverture (4) est constitué à partir de la surface externe de cette mousse, qui, par durcissement et/ou épaississement, crée ce type de revêtement qui est plus dur et/ou plus épais et résistant par rapport au corps dudit composant de rembourrage (3).

6. Selle selon l'une quelconque des revendications précédentes, dans laquelle ledit composant de base (2), ledit composant de rembourrage (3) et ledit élément de couverture (4) sont entièrement constitués de polyuréthane ou de matériau polyuréthane.

7. Selle selon l'une quelconque des revendications précédentes, dans laquelle ladite selle (1) est une selle pour bicyclettes, et dans laquelle ledit composant de base (2) est destiné à être contraint à un châssis d'une bicyclette, dans laquelle ledit composant de base (2) comprend, pour la connexion entre ledit composant de base (2) et ledit châssis, un composant de « fourche » ou une fourche (5), comprenant généralement un composant en forme de U formé par une paire de barres rondes ou de dents (5a), chacune comportant une extrémité, arrière pendant l'utilisation (5b) ainsi qu'une extrémité, avant pendant l'utilisation (5c), dans laquelle lesdites extrémités (5b) et (5c) sont contraintes audit composant de base (2), par exemple engagées dans des sièges respectifs (24).

8. Selle selon la revendication précédente, dans laquelle lesdites extrémités avant (5c) sont reliées en ponts au moyen d'une partie de connexion en forme de U.

9. Selle selon l'une quelconque des revendications précédentes, dans laquelle ledit composant de base (2) comprend, pour la connexion entre ledit composant de base (2) et ledit châssis, une coque rigide dépourvue de fourche de connexion, pouvant être directement reliée par exemple à un tube de tige de selle, ou une coque avec tube de tige de selle intégré, ou une fourche annulaire.

10. Selle selon l'une quelconque des revendications précédentes, dans laquelle ledit composant de base (2), à ladite surface inférieure (2b) et à une partie frontale effilée (2F) de celle-ci, comporte un siège (24c) façonné pour recevoir et contraindre les extrémités avant (5c) des dents de ladite fourche (5) et/ou ayant une forme adaptée pour recevoir et contraindre l'extrémité avant reliée en U (5c) de ladite fourche (5) et/ou dans laquelle ledit composant de base (2), à ladite surface inférieure (2b) et à une partie arrière élargie (2R) de celle-ci, comporte au moins un ou deux sièges (24b), façonnés pour recevoir et contraindre les extrémités arrière (5b) des dents de ladite fourche (5).

11. Selle selon l'une quelconque des revendications précédentes, dans laquelle ledit siège (24c) comporte une ouverture convenablement conformée pour loger lesdites extrémités avant (5c) de ladite fourche (5), laquelle ouverture est orientée vers la partie arrière (2R) dudit composant de base (2) et s'étend plutôt à l'intérieur de ce dernier, vers sa partie avant (2F).

12. Selle selon l'une quelconque des revendications précédentes, dans laquelle chacun dudit siège (24b) comporte une ouverture convenablement conformée pour loger l'une desdites extrémités arrière (5b) desdites dents de ladite fourche (5), laquelle ouverture est orientée vers ladite partie avant (2F) dudit composant de base (2) et s'étend plutôt à l'intérieur de ce dernier, vers sa partie arrière (2R).

13. Selle selon l'une quelconque des revendications précédentes, dans laquelle ledit composant de base (2) est configuré pour être au moins partiellement ou complètement logé ou positionné à la taille d'un évidement ou d'une partie creuse délimitée dans ledit composant de rembourrage (3).

14. Selle selon l'une quelconque des revendications précédentes, dans laquelle ladite selle (1) comprend au moins une languette s'étendant de ladite surface inférieure (3b) de l'élément de rembourrage (3) vers l'avant ou vers l'arrière de ladite selle (1), dans laquelle ladite languette est engagée avec un siège approprié formé dans ladite surface supérieure (2a) dudit composant de base (2).

15. Selle selon l'une quelconque des revendications précédentes, dans laquelle ladite selle (1) fournit une base rigide, à la surface inférieure (3b) dudit composant de rembourrage (3), ladite base rigide est adaptée pour entrer en contact ou s'appuyer avec ledit composant de base (2) et/ou dans laquelle ladite base rigide est constituée du même matériau que ledit composant de base (2) et est intégrée ou contrainte rigidement audit composant de rembourrage (3).

16. Kit pour la fabrication d'une selle (1) selon l'une quelconque des revendications précédentes, comprenant au moins un composant de base (2) et deux ou plusieurs composants de rembourrage (3), dans lequel lesdits deux ou plusieurs composants de rembourrage (3) ont la forme ou dimension différente l'un de l'autre, dans lequel chacun desdits composants de rembourrage (3) est doté de moyens de contrainte amovibles audit composant de base (2).

17. Kit selon la revendication précédente, dans lequel ledit composant de rembourrage (3) fait saillie latéralement et/ou à l'arrière et/ou à l'avant par rapport audit composant de base (2) et la surface inférieure (3b) dudit composant de rembourrage (3) est plus grande que ladite surface supérieure (2a) dudit composant de base (2).

18. Kit selon la revendication 15 ou 16, dans lequel lesdits moyens de contrainte sont formés au niveau d'une zone centrale ou intermédiaire dudit composant de rembourrage (3), de manière à ancrer de manière amovible ledit composant de base (2) et ledit composant de rembourrage (3), bien que ce dernier comporte une plus grande largeur ou dépasse par rapport audit composant de base (2).
